# FASCICULE DE BREVET EUROPEEN

(11) **EP 3 030 534 B1**
(45) Date de publication et mention de la délivrance du brevet: **27.09.2017**
(21) Numéro de dépôt: 14759033.5
(22) Date de dépôt: 01.08.2014
(51) Int. Cl.: C04B 24/24, C04B 28/02, C04B 40/00, C08G 65/327

(54) **POLY(ETHYLENE GLYCOL) GEMINE ESTER PHOSPHATE, UTILISATION COMME ADDITIF DANS LES COMPOSITIONS HYDRAULIQUES ET COMPOSITIONS LE CONTENANT.**
POLY(ETHYLENGLYKOL)GEMINALESTER-PHOSPHAT, VERWENDUNG ALS ZUSATZSTOFF IN HYDRAULISCHEN ZUSAMMENSETZUNGEN UND ZUSAMMENSETZUNGEN DAMIT
POLY(ETHYLENE GLYCOL) GEMINAL ESTER PHOSPHATE, USE AS ADDITIVE IN HYDRAULIC COMPOSITIONS AND COMPOSITIONS CONTAINING SAME

(30) Priorité: 08.08.2013 FR 1357874
(43) Date de publication de la demande: 15.06.2016
(73) Titulaire: COATEX, 69730 Genay (FR)
(72) Inventeur: PLATEL, David, F-01800 Saint Maurice De Gourdans (FR); SUAU, Jean-Marc, F-69480 Lucenay (FR)
(74) Mandataire: Balmefrezol, Ludovic Francis Pierre
(86) Numéro de dépôt international: PCT/FR2014/052009
(87) Numéro de publication internationale: WO 2015/019006

(56) Documents cités:
- EP-A1- 2 615 073
- WO-A1-2010/040611
- WO-A1-2012/140235
- FR-A1- 2 763 065
- FR-A1- 2 943 053
- US-A- 4 395 373
- US-A- 6 133 347

## Description

### Domaine de l'invention

La présente invention concerne le domaine technique des compositions hydrauliques, par exemple les compositions de béton et de mortier. De telles compositions sont destinées à l'ensemble des marchés de la construction. Plus précisément, la présente demande de brevet concerne des additifs mis en oeuvre dans de telles compositions hydrauliques.

### Arrière-plan de l'invention

Les compositions hydrauliques comprennent généralement différents additifs chimiques destinés à améliorer leurs propriétés. Parmi ceux-ci, on utilise généralement un agent chimique ayant pour fonction d'améliorer l'état de dispersion des particules minérales au sein de la composition. Cet agent chimique est indifféremment appelé « agent dispersant », « agent fluidifiant », « agent réducteur d'eau », « agent plastifiant » ou « superplastifiant ». Cet agent chimique permet de diminuer la teneur en eau des compositions hydrauliques, ce qui permet d'améliorer les performances des compositions hydrauliques, dont la résistance mécanique. D'autres additifs (par exemple des retardateurs ou des accélérateurs de prise) sont éventuellement ajoutés en parallèle dans les compositions hydrauliques.

Il existe une grande variété d'agents dispersants pour compositions hydrauliques. Ces agents diffèrent par leur composition chimique et les propriétés qu'ils induisent au sein des compositions qui les contiennent.

Pour évaluer les propriétés dispersantes de l'agent dispersant dans la composition hydraulique, on mesure l'affaissement, également appelé maniabilité (« slump » en anglais), conformément à la norme EN 12350-2. La maniabilité d'un béton est une propriété importante qui conditionne sa mise en place pour le remplissage d'un coffrage. Elle est évaluée juste après sa fabrication, ainsi qu'à des temps déterminés après fabrication, ce qui permet d'évaluer la maniabilité dans le temps, également appelée rétention de fluidité (« slump retention » en anglais), ainsi que la durée limite de maniabilité après fabrication. On comprend aisément l'intérêt d'augmenter la maniabilité d'un béton pour sa mise en oeuvre, ainsi que l'intérêt de moduler la rétention de fluidité des compositions hydrauliques, par exemple de garantir une maniabilité pendant un temps prolongé (ce qui permet notamment d'ajuster la mise en place dans le coffrage).

Par ailleurs, s'il est important d'allonger le temps de maniabilité d'un béton, cela ne doit se faire au détriment ni des performances du béton en cours de durcissement ou à l'état durci (notamment les résistances mécaniques initiales ou finales recherchées), ni du taux d'air entrainé dans les compositions hydrauliques. On évalue notamment les performances du béton à l'état durci par une mesure de résistance à la compression à différentes périodes (1, 3, 7 et 28 jours).

Un certain nombre de documents de l'art antérieur décrivent l'utilisation de composés dispersants à base de fonctions sulfonates -SO₂O⁻. L'efficacité insuffisante de tels produits a rapidement poussé l'homme du métier à développer de nouvelles structures connues sous le nom de polymères peignes.

D'autres documents de l'art antérieur décrivent, en effet, l'utilisation de copolymères peignes en tant qu'agents dispersants dans les compositions hydrauliques. On peut notamment citer les documents WO 02/083594, WO 2004/094336, US 7,261,772, US 2008/087198 et WO 2006/138017. Les copolymères peignes sont des copolymères synthétiques ayant une charge anionique sur le squelette et des chaînes latérales non chargées. Les chaînes latérales du polymère peigne chargé anioniquement peuvent comprendre des composés contenant un époxyde polymérisé, par exemple un oxyde d'éthylène, un oxyde de propylène et/ou un oxyde de 1-butylène.

Les documents US 2008/087198 et US 7,261,772 proposent la mise en oeuvre d'un amide conjointement avec lesdits copolymères peignes, cette combinaison étant présentée comme efficace pour disperser des matières minérales présentant des impuretés.

Le document WO 98/58887, quant à lui, propose de doper l'efficacité de polymères peignes dans des matrices cimentaires contenant des argiles, en utilisant des cations organiques ou inorganiques et des (poly)amines quaternaires éventuellement alkoxylées. Le document FR 2 887 542, quant à lui, recommande de mettre en oeuvre un polymère cationique particulier pour neutraliser les effets néfastes des argiles contenues dans certains sables.

Le document FR 2 759 704 décrit l'utilisation de composés polyoxydes d'alkylène pour la dispersion de noir de carbone, un matériau organique, amorphe, hydrophobe et non chargé électriquement, distinct des charges minérales de type carbonate de calcium.

Le document WO 97/19748 décrit l'utilisation d'un agent dispersant pour disperser des particules pigmentaires dans l'application peinture. Cet agent consiste en un ester phosphate poly(oxyéthylé) et poly(oxypropylé).

Les documents FR 2 696 736, FR 2 943 053, FR 2 810 314, FR 2 763 065, WO 2012/140235 et WO 2013/093344 décrivent l'utilisation de composés comportant une chaîne polyoxyalkylée et un ou deux groupements amino-méthylènes phosphoniques comme agents fluidifiants (ou extendeurs de rhéologie) pour suspensions aqueuses de particules minérales. De tels composés sont disponibles commercialement. A titre d'exemple, on peut citer les produits CHRYSO®Fluid de la gamme Optima (par exemple Optima 100 et Optima 175).

L'article de Pourchet et coll. (Influence of three types of superplasticizers on tricalciumaluminate hydration in presence of gypsum in International Conference on Superplasticizers and other chemical admixtures in concrete, Sorrento: Italy, 2006) étudie l'influence de la structure chimique de différents superplastifiants, notamment un polymère poly(oxyéthylène) diphosphonate, sur l'hydratation du ciment.

EP 2 615 073 A1 décrit un additif utilisé comme agent dispersant pour des compositions cimentaires, l'additif ayant des groupements phosphate esters liés par un groupe éthoxy à un azote, ledit azote étant lié par un triazine à un groupe de type oxyalkylé. Les inventeurs se sont rendu compte que les performances des compositions hydrauliques, évaluées par la maniabilité de ladite composition fraîchement préparée et par la résistance à la compression de ladite composition à l'état durci, pouvaient être améliorées vis-à-vis des produits de type diphosphonate alkoxylé, disponibles commercialement, par l'utilisation d'un additif chimique particulier, à savoir un polyéthylène glycol géminé ester phosphate selon l'invention.

### Brève description de l'invention

Un objet de la présente invention est de proposer un additif pour compositions hydrauliques permettant d'obtenir une excellente maniabilité après fabrication, ainsi qu'une amélioration du maintien de maniabilité dans le temps, par exemple après une période de 45 minutes de stockage puis de remalaxage.

Un autre objet de la présente invention est de proposer un additif pour compositions hydrauliques permettant d'obtenir une très bonne résistance à la compression un jour après coulage.

Un autre objet de la présente invention est de proposer un additif pour compositions hydrauliques qui permette, dans le même temps, le maintien de la maniabilité et la rapidité de la montée en résistance du matériau.

La présente invention concerne ainsi un additif chimique pour compositions hydrauliques, ledit additif conférant à cette suspension une excellente maniabilité après fabrication, ainsi qu'après un temps déterminé de stockage (par exemple 45 minutes ou plus), telle que mesurée par le test d'affaissement (« slump test» en anglais), sans diminuer la valeur de résistance à la compression du matériau obtenue un jour après mise en forme. Cet additif consiste en un polyéthylène glycol géminé mono- et di-ester phosphate.

Les tests comparatifs présentés en partie expérimentale de la présente demande démontrent, en effet, la supériorité des additifs selon la présente invention (maniabilité et résistance à la compression) comparativement à des produits de type diphosphonate alkoxylé, disponibles commercialement sous le nom CHRYSO®Fluid de la gamme Optima, notamment le produit Optima 100. L'utilisation des additifs selon l'invention permet d'augmenter les résistances à la compression à jeunes âges (1 jour) tout en assurant une amélioration de l'ouvrabilité.

Les additifs selon l'invention permettent à la fois de réduire la quantité d'eau nécessaire pour l'obtention d'une composition hydraulique manipulable et de prolonger l'ouvrabilité de la composition sans pour autant engendrer un retard de prise important.

### Description détaillée de l'invention

### Additif

Un premier objet de la présente invention consiste en un additif pour compositions hydrauliques, comprenant un mélange des composés de formules (I), (II) et (III) suivantes : 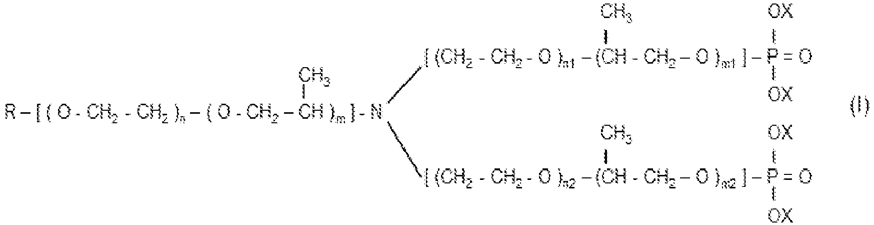 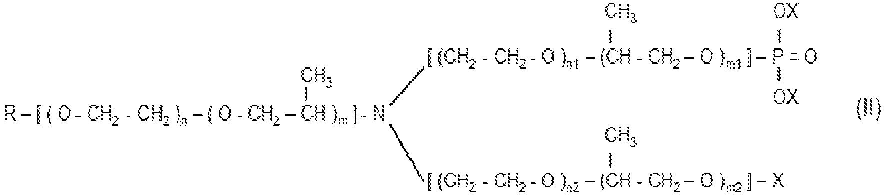 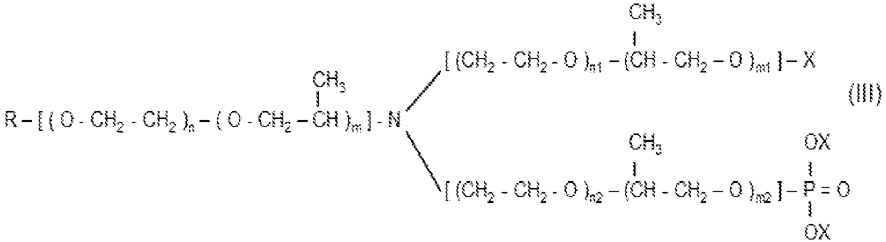 dans lesquelles :
les groupes (CH₂-CH₂-O) et (CH₂-CH(CH₃)-O) sont disposés en bloc, de manière alternée ou de manière statistique,
n, n₁ et n₂ indépendamment les uns des autres, sont des nombres entiers qui varient entre 1 et 150 (bornes incluses),
m, m₁ et m₂, indépendamment les uns des autres, sont des nombres entiers qui varient entre 0 et 150 (bornes incluses),
avec n + m ≥ 10,
avec n₁ + m₁ ≥ 1,
avec n₂ + m₂ ≥ 1,
le groupe R est choisi parmi un ou plusieurs des éléments H, CH₃, C₂H₅, C₃H₇, C₄H₉, PO₃X₂ ou le groupe NYZ dans lequel :
   Y et Z sont identiques ou différents,
   Y représente (OE)ₙ₃ - (OP)ₘ₃ - PO₃X₂ ou (OE)ₙ₃ - (OP)ₘ₃ - H,
   Z représente (OE)ₙ₄ - (OP)ₘ₄ - PO₃X₂ ou (OE)ₙ₄ - (OP)ₘ₄ - H,
   n₃ et n₄ indépendamment les uns des autres, sont des nombres entiers qui varient entre 1 et 150 (bornes incluses) et
   m₃ et m₄, indépendamment les uns des autres, sont des nombres entiers qui varient entre 0 et 150 (bornes incluses),
X représente H ou M et
M représente un cation monovalent, divalent ou trivalent.

L'additif selon l'invention consiste en un mélange de composés poly(éthylènes glycols) géminés esters phosphates, autrement dit de composés polyéthylènes glycols, éventuellement substitués, terminés à une de leur extrémité par un groupe géminé portant au moins une fonction ester phosphate. Ce groupe géminé peut donc être du type mono-ester phosphate ou di-ester phosphate. Le groupe « géminé di-ester phosphate » est également appelé groupe « gem-diphosphate » et comporte deux esters phosphates liés à un même atome d'azote. Le groupe « géminé mono-ester phosphate » comporte un groupe ester phosphate et un groupe oxyalkylé, ces deux groupes étant liés à un même atome d'azote. A toutes fins utiles, on note que le groupe « gem-diphosphate » selon l'invention est différent du groupe « gem-bisphosphoné » et du groupe « amino-méthylène phosphonique » décrits dans l'art antérieur.

Ainsi, le composé de formule (I) constitutif de l'additif selon l'invention est un composé poly(éthylène glycol) géminé di-ester phosphate, tandis que les composés de formules (II) et (III), identiques ou différents, sont des composés poly(éthylènes glycols) géminés mono-esters phosphates.

On note, à toutes fins utiles, dans le cadre de la présente invention, que :
- les groupes représentés par (CH₂-CH₂-O) ou (O-CH₂-CH₂) sont équivalents et peuvent également être représentés par (OE), également appelé oxyde d'éthylène,
- les groupes représentés par (CH₂-CH(CH₃)-O) ou (CH(CH₃)-CH₂-O) ou (O-CH₂-CH(CH₃)) ou (O-CH₂-CH(CH₃)) sont équivalents et peuvent également être représentés par (OP), également appelé oxyde de propylène,
- les groupes OE et OP, disposés de part et d'autre de l'atome d'azote ou constituant le groupe R dans les composés de la présente invention, sont disposés en bloc, de manière alternée ou de manière statistique. Ainsi, à titre d'exemple, les chaînes polyalkylènes glycols peuvent être constituées de groupes OP intercalés au milieu d'un ensemble de groupes OE ou alternativement les chaînes polyalkylènes glycols peuvent être constituées d'une série d'un nombre déterminé de groupes OP puis d'un nombre déterminé de groupes OE.

L'additif selon l'invention, ou le mélange des composés de formules (I), (II) et (III), peut se trouver sous forme de sels, stoechiométriques ou non, mixtes ou non et peut être constitué avec des métaux alcalins, des métaux alcalinoterreux, des amines ou des ammoniums quaternaires.
Selon un mode de réalisation, l'additif selon l'invention se trouve sous forme acide.

Selon un autre mode de réalisation, l'additif selon l'invention se trouve sous forme neutralisée.

Selon un autre mode de réalisation encore, l'additif selon l'invention se trouve sous forme partiellement ou totalement neutralisée.
Lorsqu'il est à l'état de sels, l'additif selon l'invention peut notamment être un sel de calcium, un sel de sodium ou un sel de diéthanolamine.
Selon un mode de réalisation, l'additif selon l'invention est tel que M est choisi dans le groupe consistant en l'ion potassium, l'ion sodium, l'ion lithium, l'ion calcium, l'ion magnésium, l'ion ammonium et un mélange de ces ions.
L'additif selon l'invention peut se présenter sous forme liquide ou sous forme solide, par exemple il peut être supporté sur un support approprié, de type minéral (silice, fumée de silice, CaCO₃...).
L'additif selon l'invention peut être hydrosoluble ou hydrodispersable.

Selon un mode de réalisation, l'additif selon l'invention est tel que, dans les formules (I), (II) et (III), n₁ + m₁ ≤ 10 et n₂ + m₂ ≤ 10.
Selon un autre mode de réalisation, l'additif selon l'invention est tel que, dans les formules (I), (II) et (III), n₁ et n₂ égalent 1 et m₁ et m₂ égalent 0.
Selon un autre mode de réalisation encore, l'additif selon l'invention est tel que, dans les formules (I), (II) et (III), R représente CH₃.
Selon un mode de réalisation, l'additif selon l'invention est tel que, dans les formules (I), (II) et (III), n varie entre 10 et 120 (bornes incluses).
Selon un autre mode de réalisation, l'additif selon l'invention est tel que, dans les formules (I), (II) et (III), n varie entre 20 et 80 (bornes incluses).

Selon un mode de réalisation, le groupe R dans les composés de formule (I), (II) ou (III) peut représenter une chaîne carbonée linéaire ou ramifiée qui comporte entre 1 et 4 atomes de carbone (bornes incluses). Par « ramifié », il faut comprendre, par opposition à une chaîne linéaire, une chaîne carbonée qui comporte au moins un groupe substituant sur le côté.
Selon un mode de réalisation, la présente invention concerne un additif pour compositions hydrauliques, comprenant un mélange des composés de formules (IV), (V) et (VI) suivantes : 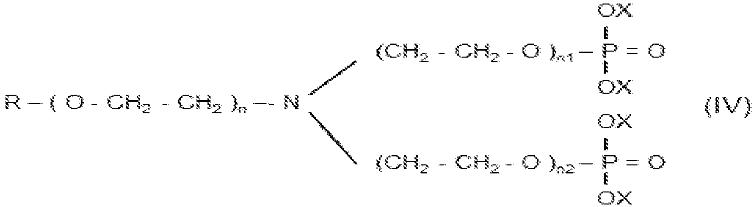 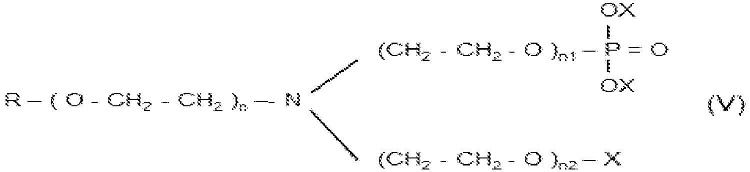 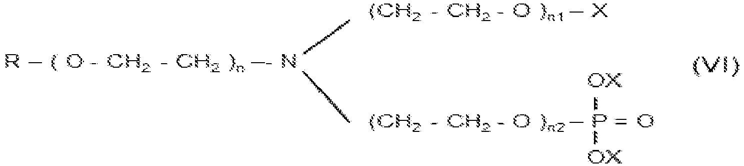 dans lesquelles R, n, n₁, n₂ et X sont tels que ci-dessus définis.
Selon un autre mode de réalisation, la présente invention concerne un additif pour compositions hydrauliques, comprenant un mélange des composés de formules (VII) et (VIII) suivantes : 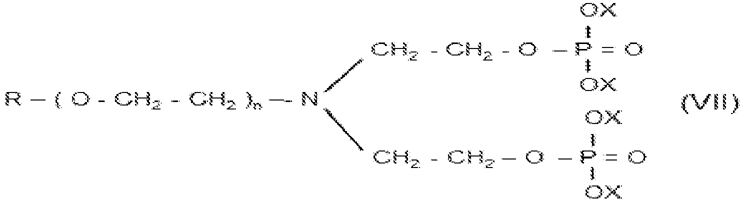 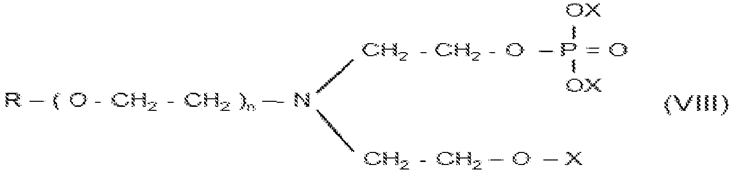 dans lesquelles R, n et X sont tels que ci-dessus définis.

L'additif de formule (VII) peut également être représenté par l'additif de formule (VII') ci-après : 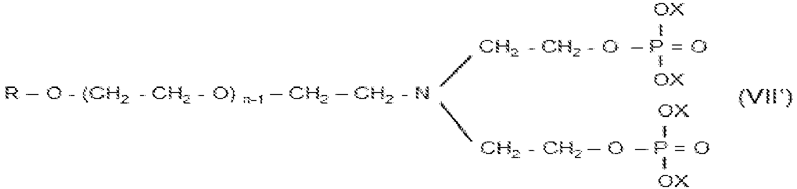 dans lesquelles R, n et X sont tels que ci-dessus définis.

L'additif de formule (VIII) peut également être représenté par l'additif de formule (VIII') ci-après : 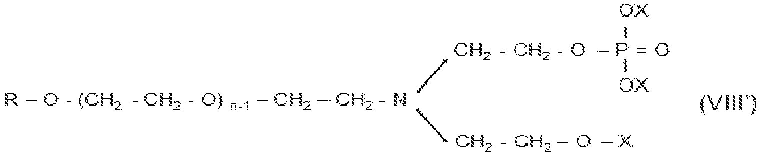 dans lesquelles R, n et X sont tels que ci-dessus définis.
Selon un autre mode de réalisation, la présente invention concerne un additif pour compositions hydrauliques, comprenant un mélange des composés de formules (IX), (X), (XI), (XII) et (XIII) suivantes : 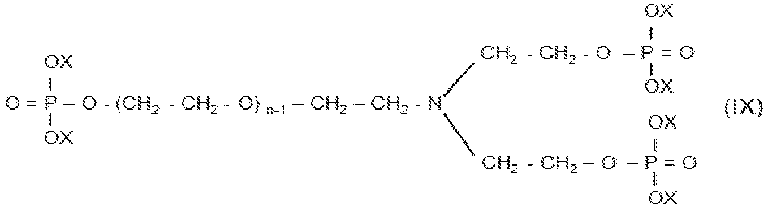 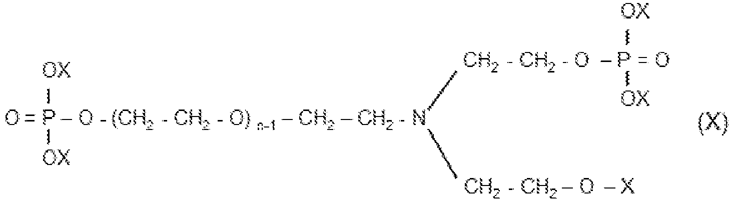 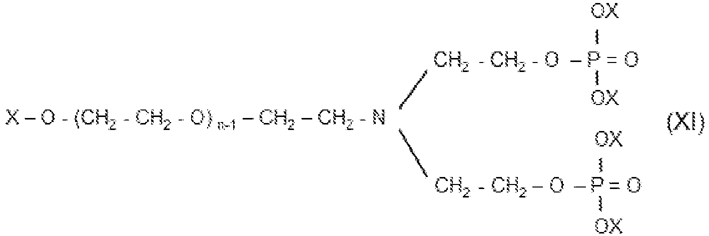 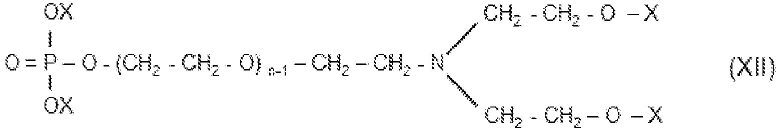 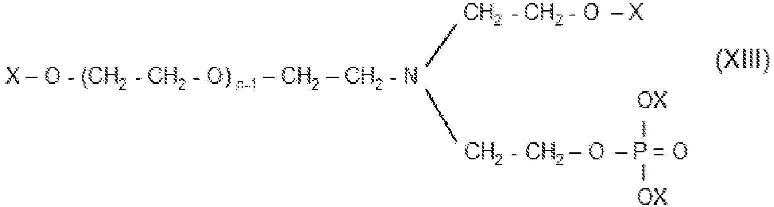 dans lesquelles R, n et X sont tels que ci-dessus définis.
Selon ce mode de réalisation, l'additif selon l'invention comprend un mélange de composés tri-phosphatés, di-phosphatés et mono-phosphatés.

Selon un mode de réalisation de la présente invention, l'additif pour compositions hydrauliques comprend, en outre, un composé de formule (XIX) :

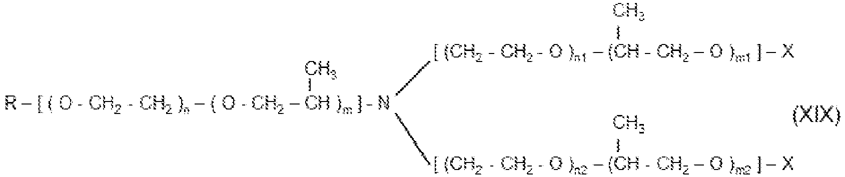

Selon un mode de réalisation, l'additif pour compositions hydrauliques comprend, en outre, un composé de formule (XIX) en une quantité inférieure à 1 % en poids.

Selon un mode de réalisation, l'additif selon la présente invention comprend, en outre, des composés (I'), (II') et (III'), de formules identiques respectivement aux composés (I), II) et (III), à la seule différence que le groupe X de chacune des fonctions ester-phosphates représente H, le cation M ou un composé de formule (I), (II) ou (III), lié au composé par une des fonctions hydroxyles de la chaîne -(CH₂-CH₂-O)ₙ₁-(CH₂-CH₂(-CH₃)-O)ₘ₁ ou -(CH₂-CH₂-O)ₙ₂-(CH₂-CH₂(-CH₃)-O)ₘ₂. Ainsi, selon ce mode de réalisation, chaque phosphate de chaque fonction ester phosphate est susceptible de former deux liaisons esters phosphates additionnelles. Selon un mode de réalisation, l'additif selon la présente invention comprend, en outre, des composés (IV'), (V') et (VI'), de formules identiques respectivement aux composés (IV), (V) et (VI), à la seule différence que le groupe X de chacune des fonctions ester-phosphates représente H, le cation M ou un composé de formule (IV), (V) ou (VI), lié au composé par une des fonctions hydroxyles de la chaîne -(CH₂-CH₂-O)ₙ₁ ou -(CH₂-CH₂-O)ₙ₂. Ainsi, selon ce mode de réalisation, chaque phosphate de chaque fonction ester phosphate est susceptible de former deux liaisons esters phosphates additionnelles.

Selon un mode de réalisation, l'additif selon la présente invention comprend, en outre, des composés (VII") et (VIII"), de formules identiques respectivement aux composés (VII) et (VIII), à la seule différence que le groupe X de chacune des fonctions ester-phosphate représente H, le cation M ou un composé de formule (VII) ou (VIII), lié au composé par une de ses fonctions hydroxyles de la chaîne éthoxylée. Ainsi, selon ce mode de réalisation, chaque phosphate de chaque fonction ester phosphate est susceptible de former deux liaisons esters phosphates additionnelles. Ainsi, le composé (VII") peut former jusqu'à 4 liaisons esters phosphates additionnelles et le composé (VIII") peut former jusqu'à 2 liaisons esters phosphates additionnelles.

### Composition hydraulique

Dans le cadre de la présente invention, la composition hydraulique est une formulation aqueuse contenant de l'eau, au moins un liant hydraulique et au moins un additif selon l'invention. Le liant hydraulique comprend au moins un ciment, par exemple un ciment de Portland. On cite également, à toutes fins utiles, les liants hydrauliques de type ciment alumineux et ciment sulfo-alumino calcique.

Le dosage de l'additif selon l'invention dépend principalement de la quantité de liants hydrauliques dans la composition hydraulique. Le plus souvent, il est exprimé en matière sèche d'additif par rapport au poids du liant hydraulique total (par exemple ciment dans les compositions de béton et de mortier).

Selon un mode de réalisation de la présente invention, ladite composition hydraulique comprend, de 0,05 % à 5 % en poids sec dudit additif par rapport au poids sec de ciment.

Selon un autre mode de réalisation de la présente invention, ladite composition hydraulique comprend, exprimé en pourcentage en poids sec dudit additif par rapport au poids sec de ciment, de 0,1 % à 3 % dudit additif.

Cette composition hydraulique est, par exemple, destinée à la fabrication d'un coulis, d'un enduit, d'une colle, d'un béton ou d'un mortier. Cette composition peut comprendre des impuretés, par exemple des argiles. Cette composition peut notamment comprendre des latex, des fibres, des granulats organiques, des granulats inorganiques, des fillers et/ou du CaCO₃.

Les compositions hydrauliques, par exemple les compositions de béton et de mortier, pour lesquelles l'additif selon l'invention peut être utile, peuvent comprendre à titre de liant hydraulique différents types de ciments, tels que les ciments CEM I, CEM II, CEM III, CEM V tels que décrits dans la norme EN 197-1. Parmi ceux-ci, les ciments CEM I ne comportent pas d'ajout. Il est néanmoins possible d'additionner à ces ciments des laitiers, cendres volantes, fillers calcaires et/ou fillers siliceux. Les compositions de béton peuvent être des bétons de classes de résistances différentes, telles que les C20/25 à C100/115.

Selon un mode de réalisation, la composition hydraulique selon l'invention comprend de 10 à 90 % en poids de liant hydraulique.

Selon un mode de réalisation, la composition hydraulique selon l'invention comprend, par rapport au poids total de la composition :
- de 2 à 15 % en poids d'eau,
- de 10 à 30 % en poids de liant hydraulique comprenant un ciment et
- de 0,05 à 3 % en poids dudit au moins un additif.

Selon ce mode de réalisation, la composition hydraulique selon l'invention peut également comprendre, en outre, de 10 à 60 % en poids de sable.

Selon un mode de réalisation, la composition hydraulique selon l'invention comprend, par rapport au poids total de la composition :
- de 2 à 15 % en poids d'eau,
- de 10 à 30 % en poids de liant hydraulique comprenant un ciment,
- de 0,05 à 3 % en poids dudit au moins un additif,
- de 10 à 60 % en poids de sable et
- de 10 à 60 % en poids d'un ou plusieurs graviers.

La composition hydraulique selon l'invention peut, en outre, comprendre un ou plusieurs ingrédients suivants :
- sable,
- graviers,
- granulats,
- fillers fins ou ultra-fins, par exemple du carbonate de calcium ou de la silice,
- agent anti-mousse,
- épaississant,
- stabilisant,
- agent biocide ou anti-bactérien,
- agent modificateur de pH et
- agent accélérateur ou retardateur de prise.

### Procédé de fabrication de l'additif selon l'invention

Un autre objet de la présente invention, consiste en un procédé de fabrication de l'additif pour compositions hydrauliques selon l'invention, par réaction entre une amine et des époxydes.

Plus précisément, le procédé de préparation de l'additif selon l'invention consiste en une étape d'oxy-alkylation d'un composé aminé puis une étape de phosphatation du composé intermédiaire ainsi obtenu.

Le procédé de fabrication de l'additif selon l'invention peut être représenté selon le mécanisme suivant, en deux, éventuellement trois, étapes : 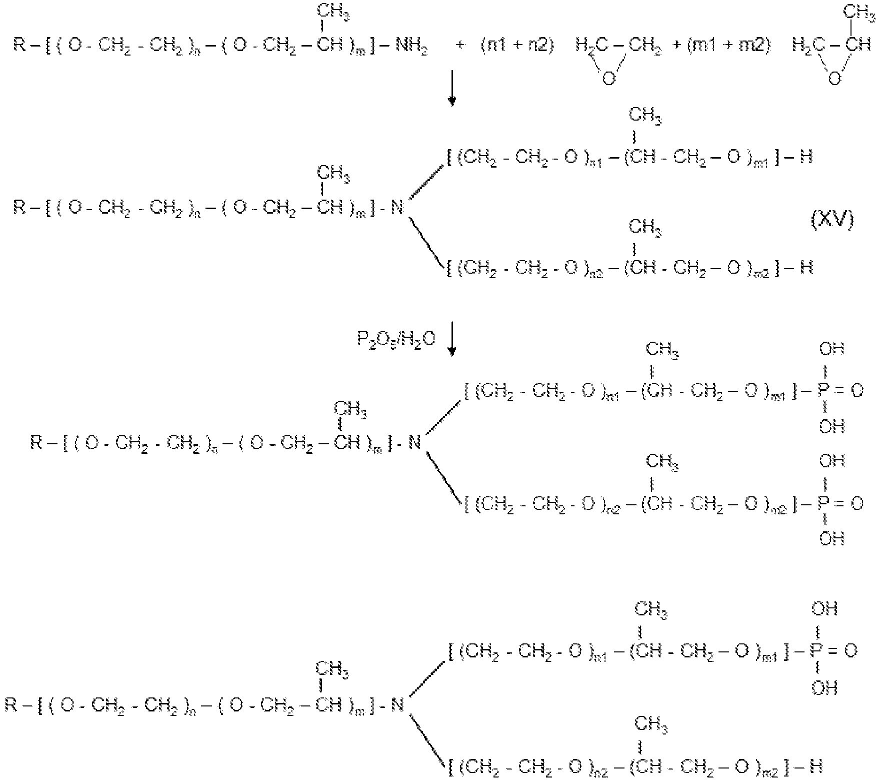 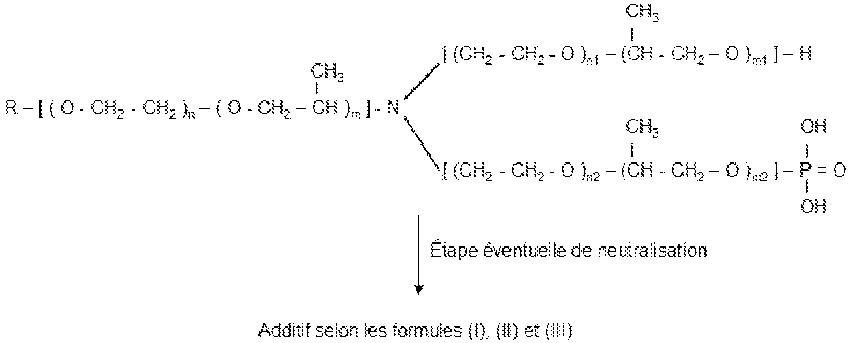 avec R, n, n₁, n₂, m, m₁ et m₂ tels que ci-dessus définis.

Selon une première étape, on procède à l'oxy-alkylation du composé amine primaire R-[(OE)ₙ-(OP)ₘ]-NH₂, dans lequel, R, n et m sont tels que précédemment définis, en présence d'oxyde d'éthylène (C₂H₄O) et d'oxyde de propylène (C₃H₇O). Cette première étape a lieu en présence d'au moins (n₁ + n₂) moles d'oxyde d'éthylène et d'au moins (m₁ + m₂) moles d'oxyde de propylène. Selon une deuxième étape, on procède à la phosphatation des composés intermédiaires ainsi obtenus. Selon une troisième éventuelle étape, on neutralise partiellement ou totalement le mélange de composés phosphatés obtenus.

Ainsi, l'invention concerne un procédé de préparation d'un additif tel que ci-dessus défini, comprenant les étapes suivantes :
- l'oxy-alkylation du composé de formule (XIV) : 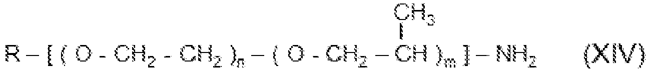 en présence d'au moins (n₁ + n₂) moles d'oxyde d'éthylène et d'au moins (m₁ + m₂) moles d'oxyde de propylène par moles de composés de formule (XIV),
- la phosphatation du composé intermédiaire de formule (XV) : 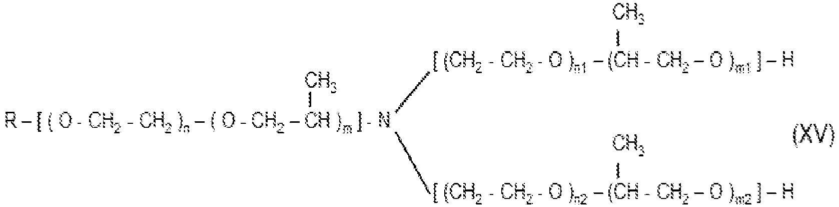 en présence de P₂O₅ et d'eau et
- éventuellement, la neutralisation partielle ou totale du composé phosphaté ainsi obtenu, de manière à obtenir un additif comprenant un mélange des composés de formules (I), (II) et (III).

Selon un mode de réalisation, le procédé de fabrication de l'additif selon l'invention peut être représenté selon le mécanisme suivant : 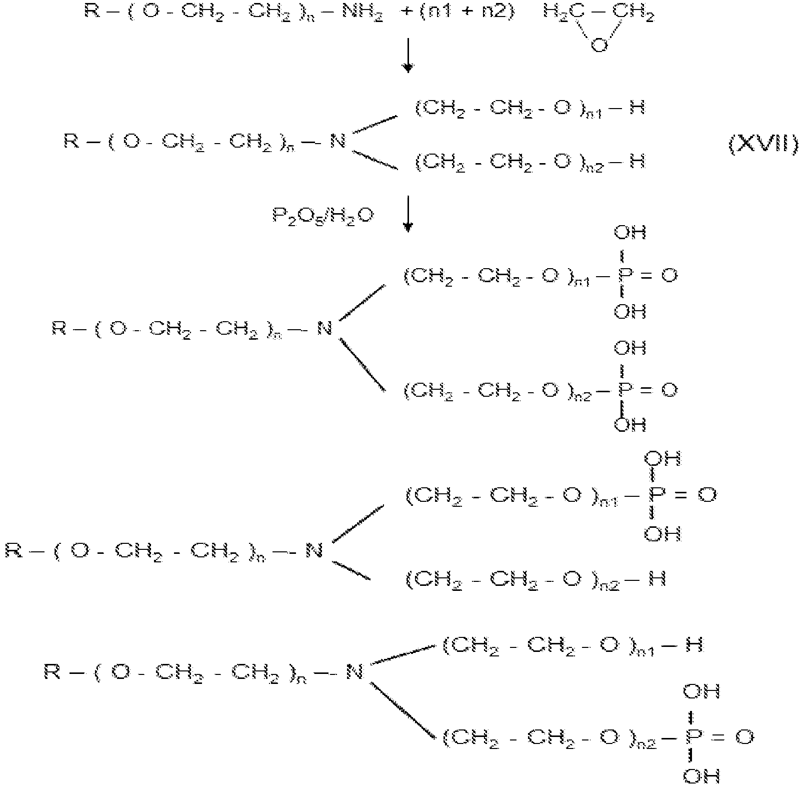 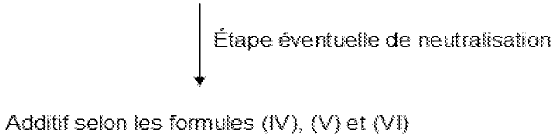 avec R, n, n₁ et n₂, tels que ci-dessus définis.

Ainsi selon ce mode de réalisation, le procédé de préparation d'un additif selon les formules (IV), (V) et (VI) comprend les étapes suivantes :
- l'oxy-alkylation du composé de formule (XVI) :

   R-(O-CH₂-CH₂)ₙ-NH₂ (XVI)

   en présence d'au moins (n₁ + n₂) moles d'oxyde d'éthylène par moles de composés de formule (XVI),
- la phosphatation du composé intermédiaire de formule (XVII) : 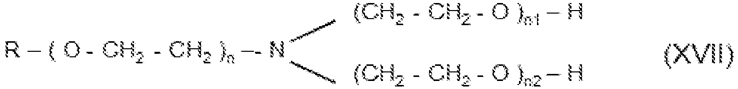 en présence de P₂O₅ et d'eau et
- éventuellement, la neutralisation partielle ou totale du composé phosphaté ainsi obtenu, de manière à obtenir un additif comprenant un mélange des composés de formules (IV), (V) et (VI).

Selon un autre mode de réalisation, le procédé de fabrication d'un additif selon l'invention peut être représenté selon le mécanisme suivant : 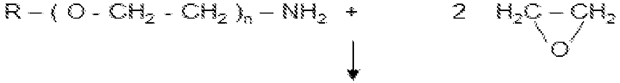 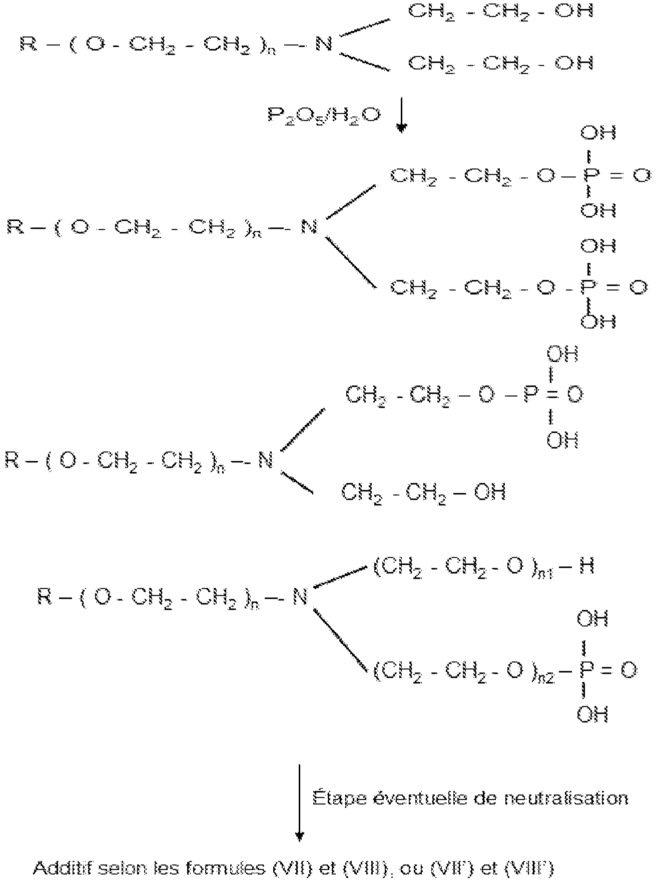 avec R et n, tels que ci-dessus définis.

Ainsi, selon ce mode de réalisation, le procédé de préparation d'un additif selon les formules (VII) et (VIII) comprend les étapes suivantes :
- l'oxy-alkylation du composé de formule (XVI) :

   R-(O-CH₂-CH₂)ₙ-NH₂ (XVI)

   en présence d'au moins 2 moles d'oxyde d'éthylène par moles de composés de formule (XVI),
- la phosphatation du composé intermédiaire de formule (XVIII) : 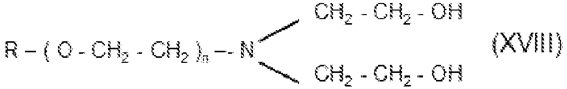 en présence de P₂O₅ et d'eau et
- éventuellement, la neutralisation partielle ou totale du composé phosphaté ainsi obtenu, de manière à obtenir un additif comprenant un mélange des composés de formules (VII) et (VIII).

Selon un mode de réalisation de la présente invention, on procède à la neutralisation partielle ou totale avant l'étape de phosphatation.

### Utilisation de l'additif selon l'invention

Un objet de la présente invention consiste en l'utilisation d'un additif tel que ci-dessus décrit pour préparer une composition hydraulique.

Selon un mode de réalisation, l'utilisation de cet additif pour composition hydraulique permet d'améliorer la maniabilité de la composition hydraulique le contenant.

Selon cette utilisation, ladite composition hydraulique comprend au moins un liant hydraulique, par exemple un ciment.

Selon un mode de réalisation, ladite composition est destinée à préparer un béton ou un mortier.

### Autres procédés

La présente invention concerne également un procédé de préparation d'un béton, comprenant une étape consistant à ajouter une quantité appropriée d'un additif pour compositions hydrauliques tel que ci-dessus décrit.

La présente invention concerne également un procédé d'obtention d'une composition hydraulique présentant une maniabilité dans le temps, ledit procédé comprenant une étape consistant à ajouter une quantité appropriée d'un additif pour compositions hydrauliques tel que ci-dessus décrit.

### EXEMPLES

Les exemples ci-dessous illustrent la préparation de différentes compositions hydrauliques. Des mesures de consistance, résistance en compression et capture d'air sont réalisées sur ces compositions selon les protocoles suivants.

### Mesure de la maniabilité (slump) - béton

Les mesures de la maniabilité, également appelées mesures de l'affaissement, sont réalisées à température ambiante, au moyen d'un cône sans fond, de forme tronconique, en acier galvanisé, appelé cône d'Abrams, selon la norme EN 12350-2. Ce cône présente les caractéristiques suivantes :
Diamètre supérieur : 100 ± 2 mm,
Diamètre inférieur : 200 ± 2 mm et
Hauteur : 300 ± 2 mm.

Le cône est posé sur une plaque humidifiée à l'aide d'une éponge.

On remplit alors le cône avec une quantité déterminée de chacune des préparations. Le remplissage dure 2 minutes. Le contenu du cône est tassé à l'aide d'une tige métallique.

### • Mesure de la maniabilité à T0

Dès la fin du remplissage, le cône est soulevé verticalement, ce qui conduit à l'affaissement de son contenu sur la plaque.

On mesure la différence de hauteur (en mm) entre le haut du cône et le dessus de la galette ronde ainsi constituée après 30 secondes.

### • Mesure de la maniabilité à T45

On laisse reposer le béton 45 minutes, on malaxe à nouveau la formulation puis on mesure la maniabilité avec le cône d'Abrams tel qu'indiqué ci-dessus.

On mesure la différence de hauteur (en mm) entre le haut du cône et le dessus de la galette ronde ainsi constituée après 30 secondes.

### Mesure de la capture d'air

La mesure de la capture d'air se fait selon la norme EN 12350-7, paragraphe 3.3.

### Mesure de la résistance en compression

Elle est mesurée selon la norme EN 12390-3, paragraphe 3. La résistance en compression est exprimée en MPa.

### Exemple 1

Dans chacun des essais 1-1 à 1-4 qui suivent, on prépare un mortier selon la norme EN 196-1, par mélange sous agitation, de sable normalisé (EN 196-1), de ciment (CEM I 52.5 N), d'eau et d'un additif hors invention ou selon l'invention. Les proportions sont données dans le tableau 1 ci-dessous.

### Essais 1-1 et 1-2 (hors invention)

Ces essais mettent en oeuvre un même additif, hors invention, présent au sein de la composition de mortier à des concentrations différentes (respectivement 0,45 % et 1,2%).

Cet additif est à base de poly(ethylène glycol) de poids moléculaire égal à 2 000 g/mol phosphatés en présence de P₂O₅/H₂O dans les conditions suivantes :
- dans un bécher de 800 ml, on pèse 260 g de PEG 2 000,
- on met en chauffe sous agitation et on ajoute progressivement pendant environ 30 minutes à une température de 70 (± 5)°C 18,5 g de P₂O₅,
- on laisse réagir pendant 3h30 à 80 (± 5)°C,
- on dilue par ajout de 273 g d'eau et
- on neutralise totalement au sodium par ajout de 32,7g de NaOH (50 %).

On obtient l'additif sous forme liquide concentré (pH = 7,5) présentant un extrait sec de 50,3 %.

### Essai 1-3 (hors invention)

Cet essai met en oeuvre un agent dispersant hors invention.

Cet agent est à base de poly(ethylène glycol) de poids moléculaire égal à 5 500 g/mol phosphatés en présence de P₂O₅/H₂O dans des conditions similaires à celles des essais 1-1 et 1-2.

On obtient l'additif sous forme liquide concentré (pH = 7) présentant un extrait sec de 41,5 %.

### Essai 1-4 (selon l'invention)

Cet essai illustre l'invention et met en oeuvre un additif comprenant un mélange de composés de formules (I), (II) et (III) dans lesquelles :
- m, m₁ et m₂ égalent 0,
- n = 45,
- n₁ et n₂ égalent 1,
- R représente CH₃ et
- X représente H.

Cet additif a été obtenu de la manière suivante :
- dans un bécher de 800 ml, on pèse 310 g de composés de formule : 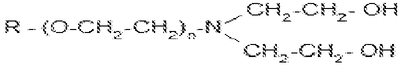 dans laquelle R représente CH₃ et n = 45,
- on met en chauffe sous agitation et on ajoute progressivement pendant environ 30 minutes à une température de 45 (± 2)°C 22 g de P₂O₅,
- on laisse réagir pendant 4h à 55 (± 5)°C,
- on dilue par ajout de 310 g d'eau et
- on neutralise totalement au sodium par ajout de 13,8 g de NaOH (50 %).

On obtient l'additif sous forme liquide concentré (pH = 7,4) présentant un extrait sec de 53 %.

**Tableau 1**

| **Essai** | **1-1** | **1-2** | **1-3** | **1-4** |
|---|---|---|---|---|
| | Hors INV | Hors INV | Hors INV | Invention |
| Sable (g) | 2700 | 2700 | 2700 | 2700 |
| Ciment (g) | 900 | 900 | 900 | 900 |
| Additif en l'état (g) | 8,05 | 21,47 | 10 | 7,6 |
| Eau (g) | 435 | 435 | 435 | 435 |
| % additif sec/ciment | 0,45 | 1,20 | 0,45 | 0,45 |

On mesure la maniabilité à T0 en utilisant le test décrit en préambule adapté au mortier (mini-cône d'Abrams) et la capture d'air de chacune des préparations de mortier. Les résultats obtenus sont présentés dans le tableau 2 ci-dessous.

**Tableau 2**

| **Essai** | **1-1** | **1-2** | **1-3** | **1-4** |
|---|---|---|---|---|
| | Hors INV | Hors INV | Hors INV | Invention |
| Maniabilité T0 (mm) | 100 | 175 | 140 | 270 |
| Capture d'air (%) | 5,7 | 6,0 | 5,7 | 5,9 |

Le meilleur résultat est obtenu avec l'additif selon l'invention (essai 1-4).

Il permet d'atteindre une maniabilité (ou affaissement) à T0 supérieure à celle des mortiers utilisant un agent hors invention (essais 1-1 à 1-3).

### Exemple 2

Dans chacun des essais 2-1 à 2-3 qui suivent, on prépare un béton selon la norme EN 480-1, par mélange sous agitation, de sable normalisé (0/4), de ciment (CEM I 52.5N Holcim), de graviers 4/11 et 11/22, d'eau et éventuellement d'un additif selon l'art antérieur ou selon l'invention. Les proportions sont données dans le tableau 3 ci-dessous.

### Essai 2-1 (témoin)

Cet essai constitue un témoin et ne met en oeuvre aucun agent dispersant.

### Essai 2-2 (art antérieur)

Cet essai illustre l'art antérieur et met en oeuvre un produit commercial vendu sous le nom CHRYSO®Fluid Optima 100.

L'extrait sec de cet additif est de 30 %.

### Essai 2-3 (selon l'invention)

Cet essai illustre l'invention et met en oeuvre un additif comprenant un mélange de composés de formules (I), (II) et (III) dans lesquelles :
- m, m₁ et m₂ égalent 0,
- n = 45,
- n₁ et n₂ égalent 1,
- R représente CH₃ et
- X représente H.

L'extrait sec de cet additif est de 41 %.

Cet additif a été obtenu selon un procédé similaire à celui de l'essai 1-4.

**Tableau 3**

| **Essai** | **2-1** | **2-2** | **2-3** |
|---|---|---|---|
| | Témoin | Art antérieur | Invention |
| Sable (kg) | 51,6 | 51,6 | 51,6 |
| Gravier 4/11 (kg) | 22,8 | 22,8 | 22,8 |
| Gravier 11/22 (kg) | 36,6 | 36,6 | 36,6 |
| Ciment (kg) | 21 | 21 | 21 |
| Additif en l'état (kg) | - | 0,285 | 0,200 |
| Eau (kg) | 13,850 | 10,388 | 10,388 |
| Réduction eau | | -25% | - 25% |

On mesure la maniabilité à T0 et à T45, la résistance à la compression à J1 et la capture d'air de chacune des préparations de béton. Les résultats obtenus sont présentés dans le tableau 4 ci-dessous.

**Tableau 4**

| **Essai** | **2-1** | **2-2** | **2-3** |
|---|---|---|---|
| | Témoin | Art antérieur | Invention |
| Maniabilité T0 (mm) | 200 | 130 | 180 |
| Capture d'air (%) | 1,8 | 4,5 | 3,9 |
| Maniabilité T45 (mm) | 185 | 0 | 50 |
| Resistance J1 (MPa) | 7,97 | 10,48 | 14,65 |

Le meilleur résultat est obtenu avec l'additif selon l'invention (essai 2-3) :
- il permet de réduire la quantité d'eau de 25 % par rapport au témoin (essai 2-1),
- il permet d'atteindre une maniabilité (ou affaissement) à T0 supérieure à celle de la composition utilisant un additif selon l'art antérieur (essai 2-2),
- il permet, par ailleurs, d'obtenir une capture d'air (synonyme de zones de faiblesse dans le béton) inférieure à celle de la composition utilisant un additif selon l'art antérieur (essai 2-2),
- sa maniabilité à T45 est supérieure à celle de la composition utilisant un additif selon l'art antérieur (essai 2-2). Ainsi, le béton a une meilleure rétention de fluidité par rapport à une composition de béton utilisant un additif selon l'art antérieur (essai 2-2) et
- il permet d'obtenir une résistance à 24h qui est très significativement supérieure à celle de la composition utilisant un additif selon l'art antérieur (essai 2-2).

### Exemple 3

Dans chacun des essais 3-1 à 3-3 qui suivent, on prépare un béton selon la norme EN 480-1, par mélange sous agitation, de sable normalisé (0/4), de ciment (CEM I 52.5N Holcim), de graviers 4/11 et 11/22, d'eau et éventuellement d'un additif selon l'art antérieur ou selon l'invention. Les proportions sont données dans le tableau 5 ci-dessous.

### Essai 3-1 (témoin)

Cet essai constitue un témoin et ne met en oeuvre aucun agent dispersant.

### Essai 3-2 (art antérieur)

Cet essai illustre l'art antérieur et met en oeuvre un produit commercial vendu sous le nom CHRYSO®Fluid Optima 100.

L'extrait sec de cet additif est de 30 %.

### Essai 3-3 (selon l'invention)

Cet essai illustre l'invention et met en oeuvre un additif comprenant un mélange de composés de formules (I), (II) et (III) dans lesquelles :
- m, m₁ et m₂ égalent 0,
- n = 45,
- n₁ et n₂ égalent 1,
- R représente CH₃ et
- X représente H.

L'extrait sec de cet additif est de 41 %.

Cet additif a été obtenu selon un procédé similaire à celui de l'essai 1-4.

**Tableau 5**

| **Essai** | **3-1** | **3-2** | **3-3** |
|---|---|---|---|
| | Témoin | Art antérieur | Invention |
| Sable (kg) | 51,6 | 51,6 | 51,6 |
| Gravier 4/11 (kg) | 22,8 | 22,8 | 22,8 |
| Gravier 11/22 (kg) | 36,6 | 36,6 | 36,6 |
| Ciment (kg) | 21 | 21 | 21 |
| Additif en l'état (kg) | - | 0,121 | 0,087 |
| % additif sec/ciment | - | 0,17 | 0,17 |
| Eau (kg) | 13,349 | 11,555 | 11,496 |
| Réduction eau | | -13,9% | - 13,4 % |

On mesure la maniabilité à T0, à T45, la résistance à la compression à J1 et la capture d'air de chacune des préparations de béton. Les résultats obtenus sont présentés dans le tableau 6 ci-dessous.

**Tableau 6**

| **Essai** | **3-1** | **3-2** | **3-3** |
|---|---|---|---|
| | Témoin | Art antérieur | Invention |
| Maniabilité T0 (mm) | 195 | 180 | 195 |
| Capture d'air (%) | 1,8 | 4,1 | 3,9 |
| Maniabilité T45 (mm) | 110 | 0 | 100 |
| Resistance J1 (mPa) | 6,99 | 9,43 | 10,89 |

Le meilleur résultat est obtenu avec l'additif selon l'invention (essai 3-3) :
- il permet d'atteindre une maniabilité (ou affaissement) à T0 supérieure à celle de la composition utilisant un additif selon l'art antérieur (essai 3-2),
- il permet, par ailleurs, d'obtenir une capture d'air (synonyme de zones de faiblesse dans le béton) inférieure à celle de la composition utilisant un additif selon l'art antérieur (essai 3-2),
- sa maniabilité à T45 est supérieure à celle de la composition utilisant un additif selon l'art antérieur (essai 3-2). Ainsi, le béton a une meilleure rétention de fluidité par rapport à une composition de béton utilisant un additif selon l'art antérieur (essai 3-2) et
- il permet d'obtenir une résistance à J1 qui est significativement supérieure à celle de la composition utilisant un additif selon l'art antérieur (essai 3-2).

## Revendications

1. Additif pour compositions hydrauliques, comprenant un mélange des composés de formules (I), (II) et (III) suivantes : 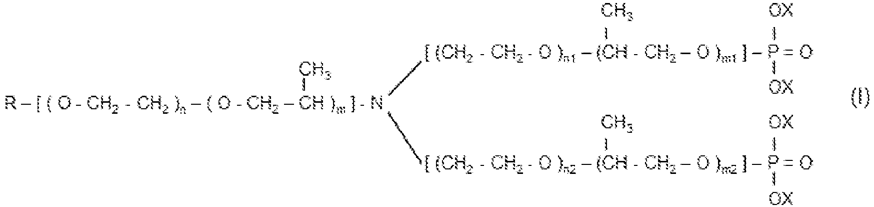 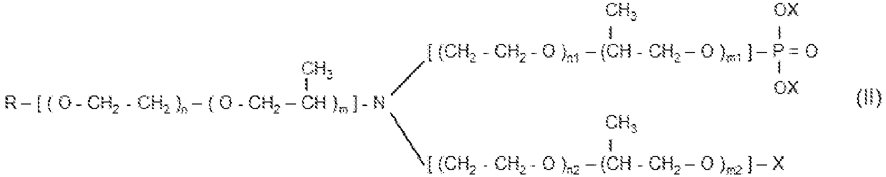 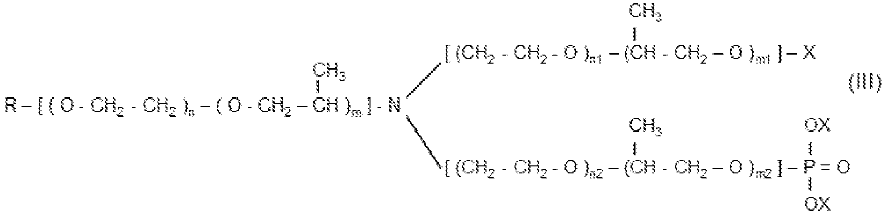 dans lesquelles :
les groupes (CH₂-CH₂-O) et (CH₂-CH(CH₃)-O) sont disposés en bloc, de manière alternée ou de manière statistique,
n, n₁ et n₂ indépendamment les uns des autres, sont des nombres entiers qui varient entre 1 et 150 (bornes incluses),
m, m₁ et m₂, indépendamment les uns des autres, sont des nombres entiers qui varient entre 0 et 150 (bornes incluses),
avec n + m ≥ 10,
avec n₁ + m₁ ≥ 1,
avec n₂ + m₂ ≥ 1,
le groupe R est choisi parmi un ou plusieurs des éléments H, CH₃, C₂H₅, C₃H₇, C₄H₉, PO₃X₂ ou le groupe NYZ dans lequel :
Y et Z sont identiques ou différents,
Y représente (OE)ₙ₃ - (OP)ₘ₃ - PO₃X₂ ou (OE)ₙ₃ - (OP)ₘ₃ - H,
Z représente (OE)ₙ₄ - (OP)ₘ₄ - PO₃X₂ ou (OE)ₙ₄ - (OP)ₘ₄ - H,
n₃ et n₄ indépendamment les uns des autres, sont des nombres entiers qui varient entre 1 et 150 (bornes incluses) et
m₃ et m₄, indépendamment les uns des autres, sont des nombres entiers
qui varient entre 0 et 150 (bornes incluses),
X représente H ou M et
M représente un cation monovalent, divalent ou trivalent.

2. Additif selon la revendication 1, dans lequel n₁ + m₁ ≤ 10 et n₂ + m₂ ≤ 10.

3. Additif selon l'une quelconque des revendications précédentes, selon lequel, dans les formules (I), (II) et (III), n₁ et n₂ égalent 1 et m₁ et m₂ égalent 0.

4. Additif selon l'une quelconque des revendications précédentes, selon lequel, dans les formules (I), (II) et (III), R représente CH₃.

5. Additif selon l'une quelconque des revendications précédentes, selon lequel M est choisi dans le groupe consistant en l'ion potassium, l'ion sodium, l'ion lithium, l'ion calcium, l'ion magnésium, l'ion ammonium et un mélange de ces ions.

6. Additif selon l'une quelconque des revendications précédentes, selon lequel, dans la formule (I), m égale 0.

7. Additif selon l'une quelconque des revendications précédentes, selon lequel dans la formule (I), n varie entre 20 et 120 (bornes incluses).

8. Composition hydraulique comprenant :
- de l'eau,
- un liant hydraulique comprenant un ciment et
- au moins un additif pour compositions hydrauliques selon l'une quelconque des revendications 1 à 7.

9. Composition hydraulique selon la revendication 8, comprenant, par rapport au poids total de la composition :
- de 2 à 15 % en poids d'eau,
- de 10 à 30 % en poids de liant hydraulique comprenant un ciment et
- de 0,05 à 3 % en poids dudit au moins un additif.

10. Composition hydraulique selon la revendication 9, comprenant, en outre, de 10 à 60 % en poids de sable.

11. Composition hydraulique pour béton selon l'une quelconque des revendications 8 à 10, comprenant :
- de 2 à 15 % en poids d'eau,
- de 10 à 30 % en poids de liant hydraulique comprenant un ciment,
- de 0,05 à 3 % en poids dudit au moins un additif,
- de 10 à 60 % en poids de sable et
- de 10 à 60 % en poids d'un ou plusieurs graviers.

12. Procédé de préparation d'un additif pour compositions hydrauliques, ledit additif comprenant un mélange de composés de formules (I), (II) et (III) suivantes : 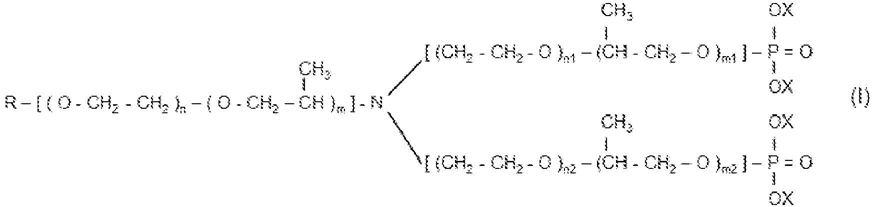 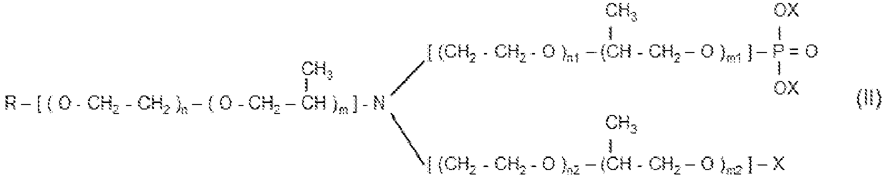 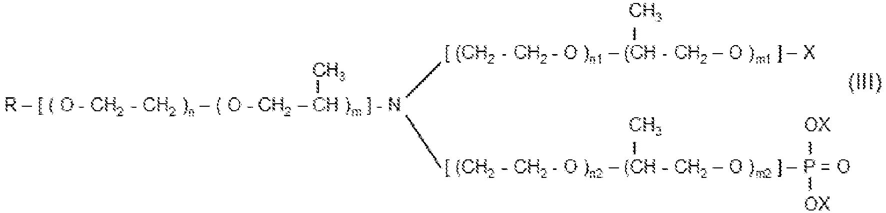 dans lesquelles :
les groupes (CH₂-CH₂-O) et (CH₂-CH(CH₃)-O) sont disposés en bloc, de manière alternée ou de manière statistique,
n, n₁ et n₂ indépendamment les uns des autres, sont des nombres entiers qui varient entre 1 et 150 (bornes incluses),
m, m₁ et m₂, indépendamment les uns des autres, sont des nombres entiers qui varient entre 0 et 150 (bornes incluses),
avec n + m ≥ 10,
avec n₁ + m₁ ≥ 1,
avec n₂ + m₂ ≥ 1,
le groupe R est choisi parmi un ou plusieurs des éléments H, CH₃, C₂H₅, C₃H₇, C₄H₉, PO₃X₂ ou le groupe NYZ dans lequel :
Y et Z sont identiques ou différents,
Y représente (OE)ₙ₃ - (OP)ₘ₃ - PO₃X₂ ou (OE)ₙ₃ - (OP)ₘ₃ - H,
Z représente (OE)ₙ₄ - (OP)ₘ₄ - PO₃X₂ ou (OE)ₙ₄ - (OP)ₘ₄ - H,
n₃ et n₄ indépendamment les uns des autres, sont des nombres entiers qui varient entre 1 et 150 (bornes incluses) et
m₃ et m₄, indépendamment les uns des autres, sont des nombres entiers
qui varient entre 0 et 150 (bornes incluses),
X représente H ou M et
M représente un cation monovalent, divalent ou trivalent.
ledit procédé comprenant les étapes suivantes :
- l'oxy-alkylation du composé de formule (XIV) : 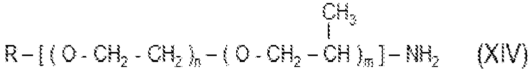 en présence d'au moins (n₁ + n₂) moles d'oxyde d'éthylène et d'au moins (m₁+m₂) moles d'oxyde de propylène par mole de composé de formule (XIV),
- la phosphatation du composé intermédiaire de formule (XV) : 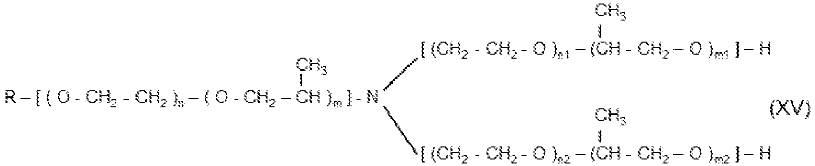 en présence de P₂O₅ et d'eau et
- éventuellement, la neutralisation partielle ou totale du composé phosphaté ainsi obtenu, de manière à obtenir un additif comprenant un mélange des composés de formules (I), (II) et (III).

13. Utilisation d'un additif selon l'une quelconque des revendications 1 à 7, pour préparer une composition hydraulique choisie parmi un béton et un mortier.

14. Procédé de préparation d'une composition hydraulique, consistant à ajouter un additif selon l'une quelconque des revendications 1 à 7 dans ladite composition.

## Patentansprüche

1. Additiv für hydraulische Zusammensetzungen, umfassend ein Gemisch von Verbindungen der folgenden Formeln (I), (II) und (III): 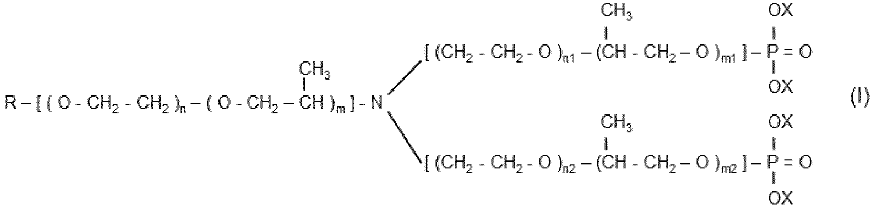 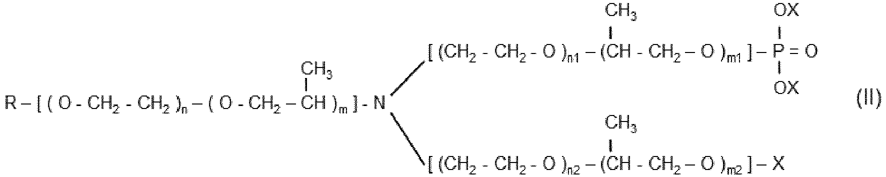 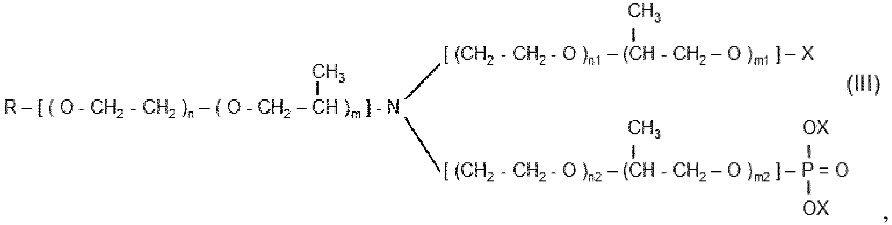 in denen :
die Gruppen (CH₂-CH₂-O) und (CH₂-CH(CH₃)-O) in Blöcken abwechselnd oder statistisch angeordnet sind,
n, n₁ und n₂ unabhängig voneinander ganze Zahlen sind, die zwischen 1 und 150 (einschließlich der Grenzen) variieren,
m, m₁ und m₂ unabhängig voneinander ganze Zahlen sind, die zwischen 0 und 150 (einschließlich der Grenzen) variieren),
mit n + m ≥ 10,
mit n₁ + m₁ ≥ 1,
mit n₂ + m₂ ≥ 1,
die Gruppe R aus einem oder mehreren der Elemente H, CH₃, C₂H₅, C₃H₇, C₄H_{9,} PO₃X₂ oder der Gruppe NYZ ausgewählt ist, in der :
Y und Z gleich oder verschieden sind,
Y für (OE)ₙ₃ - (OP)ₘ₃ - PO₃X₂ oder (OE)ₙ₃ - (OP)ₘ₃ - H steht,
Z für (OE)ₙ₄ - (OP)ₘ₄ - PO₃X₂ oder (OE)ₙ₄ - (OP)ₘ₄ - H steht,
n₃ und n₄ unabhängig voneinander ganze Zahlen sind, die zwischen 1 und 150 (einschließlich der Grenzen) variieren, und
m₃ und m₄ unabhängig voneinander ganze Zahlen sind, die zwischen 0 und 150 (einschließlich der Grenzen) variieren,
X für H oder M steht und
M für ein einwertiges, zweiwertiges oder dreiwertiges Kation steht.

2. Additiv nach Anspruch 1, wobei n₁ + m₁ ≤ 10 und n₂ + m₂ ≤ 10.

3. Additiv nach einem der vorhergehenden Ansprüche, wobei in den Formeln (I), (II) und (III) n₁ und n₂ gleich 1 sind und m₁ und m₂ gleich 0 sind.

4. Additiv nach einem der vorhergehenden Ansprüche, wobei in den Formeln (I), (II) und (III) R für CH₃ steht.

5. Additiv nach einem der vorhergehenden Ansprüche, wobei M aus der Gruppe ausgewählt ist, die aus Kaliumion, Natriumion, Lithiumion, Calciumion, Magnesiumion, Ammoniumion und einem Gemisch dieser Ionen besteht.

6. Additiv nach einem der vorhergehenden Ansprüche, wobei in der Formel (I) m gleich 0 ist.

7. Additiv nach einem der vorhergehenden Ansprüche, wobei in der Formel (I) n zwischen 20 und 120 (einschließlich der Grenzen) variiert.

8. Hydraulische Zusammensetzung, umfassend :
- Wasser,
- ein hydraulisches Bindemittel, das einen Zement umfasst, und
- mindestens ein Additiv nach einem der Ansprüche 1 bis 7.

9. Hydraulische Zusammensetzung nach Anspruch 8, die bezogen auf das Gesamtgewicht der Zusammensetzung Folgendes umfasst:
- 2 bis 15 Gew.-% Wasser,
- 10 bis 30 Gew.-% hydraulisches Bindemittel, das einen Zement umfasst, und
- 0,05 bis 3 Gew.-% des mindestens einen Additivs.

10. Hydraulische Zusammensetzung nach Anspruch 9, die außerdem 10 bis 60 Gew.-% Sand umfasst.

11. Hydraulische Zusammensetzung für Beton nach einem der Ansprüche 8 bis 10, die Folgendes umfasst:
- 2 bis 15 Gew.-% Wasser,
- 10 bis 30 Gew.-% hydraulisches Bindemittel, das einen Zement umfasst,
- 0,05 bis 3 Gew.-% des mindestens einen Additivs,
- 10 bis 60 Gew.-% Sand und
- 10 bis 60 Gew.-% von einem oder mehreren Kiesen.

12. Verfahren zur Herstellung eines Additivs für hydraulische Zusammensetzungen, wobei das Additiv ein Gemisch von Verbindungen der folgenden Formeln (I), (II) und (III) umfasst: 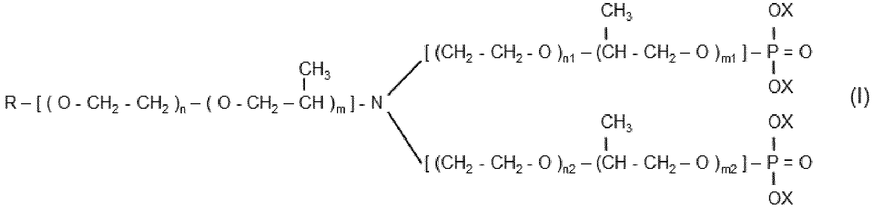 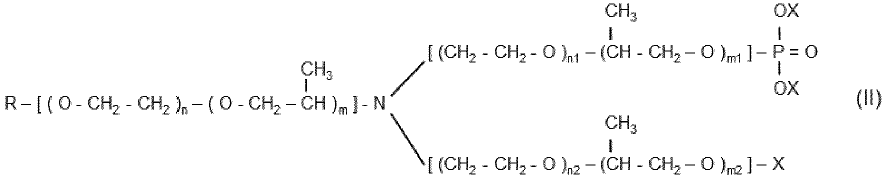 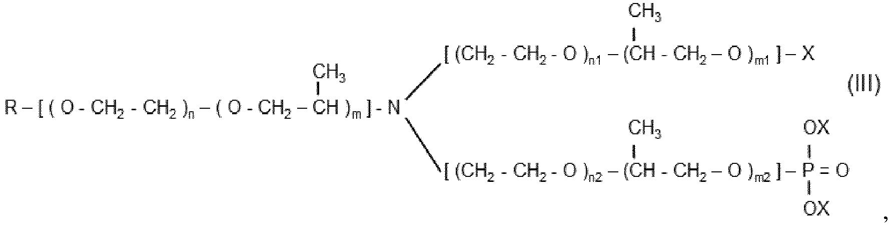 in denen :
die Gruppen (CH₂-CH₂-O) und (CH₂-CH(CH₃)-O) in Blöcken abwechselnd oder statistisch angeordnet sind,
n, n₁ und n₂ unabhängig voneinander ganze Zahlen sind, die zwischen 1 und 150 (einschließlich der Grenzen) variieren,
m, m₁ und m₂ unabhängig voneinander ganze Zahlen sind, die zwischen 0 und 150 (einschließlich der Grenzen) variieren),
mit n + m ≥ 10,
mit n₁ + m₁ ≥ 1,
mit n₂ + m₂ ≥ 1,
die Gruppe R aus einem oder mehreren der Elemente H, CH₃, C₂H₅, C₃H₇, C₄H₉, PO₃X₂ oder der Gruppe NYZ ausgewählt ist, in der :
Y und Z gleich oder verschieden sind,
Y für (OE)ₙ₃ - (OP)ₘ₃ - PO₃X₂ oder (OE)ₙ₃ - (OP)ₘ₃ - H steht,
Z für (OE)ₙ₄ - (OP)ₘ₄ - PO₃X₂ oder (OE)ₙ₄ - (OP)ₘ₄ - H steht,
n₃ und n₄ unabhängig voneinander ganze Zahlen sind, die zwischen 1 und 150 (einschließlich der Grenzen) variieren, und
m₃ und m₄ unabhängig voneinander ganze Zahlen sind, die zwischen 0 und 150 (einschließlich der Grenzen) variieren,
X für H oder M steht und
M für ein einwertiges, zweiwertiges oder dreiwertiges Kation steht, wobei das Verfahren die folgenden Schritte umfasst:
- die Oxyalkylierung der Verbindung der Formel (XIV) : 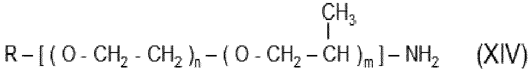 in Gegenwart von mindestens (n₁ + n₂) Molen Ethylenoxid und mindestens (m₁+m₂) Molen Propylenoxid pro Mol der Verbindung der Formel (XIV),
- die Phosphatierung der Zwischenverbindung der Formel (XV) : 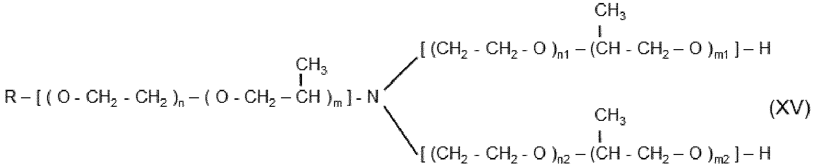 in Gegenwart von P₂O₅ und Wasser und
- gegebenenfalls die partielle oder vollständige Neutralisierung der erhaltenen phosphatierten Verbindung, um ein Additiv zu erhalten, das ein Gemisch von Verbindungen der Formeln (I), (II) und (III) umfasst.

13. Verwendung eines Additivs nach einem der Ansprüche 1 bis 7 zur Herstellung einer hydraulischen Zusammensetzung, die aus einem Beton und einem Mörtel ausgewählt ist.

14. Verfahren zur Herstellung einer hydraulischen Zusammensetzung, das aus dem Zugeben eines Additivs nach einem der Ansprüche 1 bis 7 zu der Zusammensetzung besteht.

## Claims

1. An additive for hydraulic compositions, comprising a mixture of the compounds of the following formulas (I), (II) and (III): 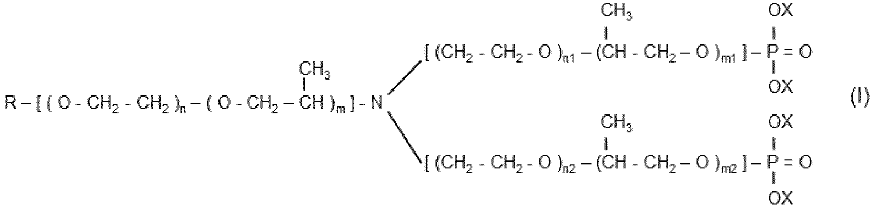 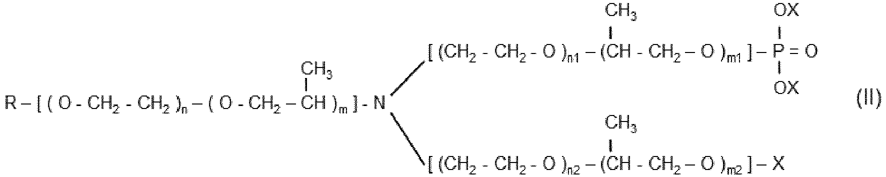 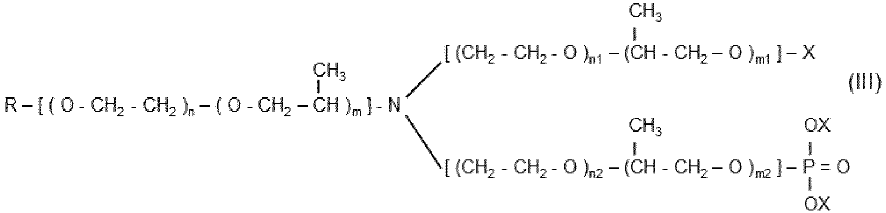 in which:
the groups (CH₂-CH₂-O) and (CH₂-CH(CH₃)-O) are arranged in blocks, alternately or randomly,
n, n₁ and n₂, independently of one another, are integers which vary between 1 and 150 (inclusive),
m, m₁ and m₂, independently of one another, are integers which vary between 0 and 150 (inclusive),
with n + m ≥ 10,
with n₁ + m₁ ≥ 1,
with n₂ + m₂ ≥ 1,
the group R is chosen from one or more of the elements H, CH₃, C₂H₅, C₃H₇, C₄H₉, PO₃X₂ or the group NYZ in which:
Y and Z are identical or different,
Y represents (EO)ₙ₃ - (PO)ₘ₃ - PO₃X₂ or (EO)ₙ₃ - (PO)m3 - H,
Z represents (EO)ₙ₄ - (PO)ₘ₄ - PO₃X₂ or (EO)ₙ₄ - (PO)m4 - H,
n₃ and n₄, independently of one another, are integers which vary between 1 and 150 (inclusive) and
m₃ and m₄, independently of one another, are integers which vary between 0 and 150 (inclusive),
X represents H or M and
M represents a monovalent, divalent or trivalent cation.

2. The additive according to claim 1, in which n₁ + m₁ ≤ 10 and n₂ + m₂ ≤ 10.

3. The additive according to any one of the preceding claims, according to which, in formulas (I), (II) and (III), n₁ and n₂ are equal to 1 and m₁ and m₂ are equal to 0.

4. The additive according to any one of the preceding claims, according to which, in formulas (I), (II) and (III), R represents CH₃.

5. The additive according to any one of the preceding claims, according to which M is chosen from the group consisting of the potassium ion, sodium ion, lithium ion, calcium ion, magnesium ion, ammonium ion and a mixture of these ions.

6. The additive according to any one of the preceding claims, according to which, in formula (I), m is equal to 0.

7. The additive according to any one of the preceding claims, according to which in formula (I), n varies between 20 and 120 (inclusive).

8. A hydraulic composition comprising:
- water,
- a hydraulic binder comprising a cement and
- at least one additive for hydraulic compositions according to any one of the claims 1 to 7.

9. The hydraulic composition according to claim 8, comprising, based on the total weight of the composition:
- from 2 to 15% by weight of water,
- from 10 to 30% by weight of hydraulic binder comprising a cement and
- from 0.05 to 3% by weight of said at least one additive.

10. The hydraulic composition according to claim 9, further comprising from 10 to 60% by weight of sand.

11. The hydraulic composition for concrete according to any one of the claims 8 to 10, comprising:
- from 2 to 15% by weight of water,
- from 10 to 30% by weight of hydraulic binder comprising a cement,
- from 0.05 to 3% by weight of said at least one additive,
- from 10 to 60% by weight of sand and
- from 10 to 60% by weight of one or more gravels.

12. A method for preparing an additive for hydraulic compositions, said additive comprising a mixture of compounds of the following formulas (I), (II) and (III): 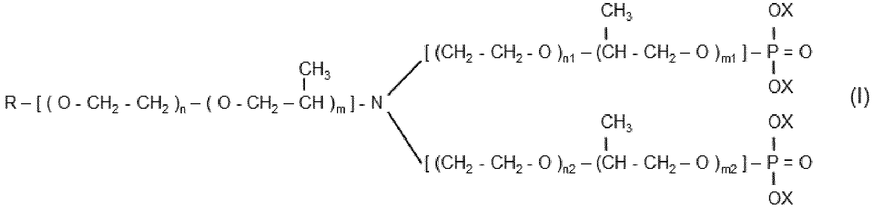 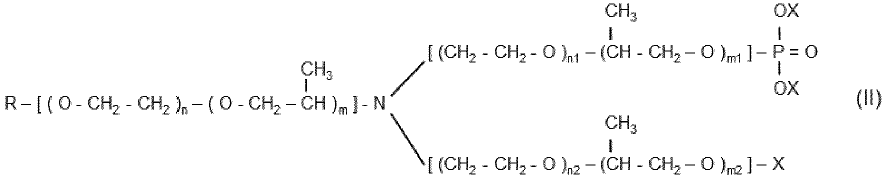 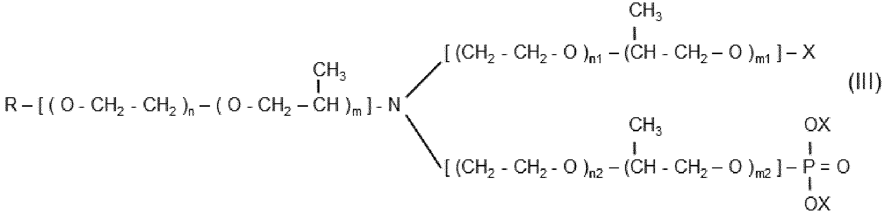 in which:
the groups (CH₂-CH₂-O) and (CH₂-CH(CH₃)-O) are arranged in blocks, alternately or randomly,
n, n₁ and n₂, independently of one another, are integers which vary between 1 and 150 (inclusive),
m, m₁ and m₂, independently of one another, are integers which vary between 0 and 150 (inclusive),
with n + m ≥ 10,
with n₁ + m₁ ≥ 1,
with n₂ + m₂ ≥ 1,
the group R is chosen from one or more of the elements H, CH₃, C₂H₅, C₃H₇, C₄H₉, PO₃X₂ or the group NYZ in which:
Y and Z are identical or different,
Y represents (EO)ₙ₃ - (PO)ₘ₃ - PO₃X₂ or (EO)ₙ₃ - (PO)m3 - H,
Z represents (EO)ₙ₄ - (PO)ₘ₄ - PO₃X₂ or (EO)ₙ₄ - (PO)m4 - H,
n₃ and n₄, independently of one another, are integers which vary between 1 and 150 (inclusive) and
m₃ and m₄, independently of one another, are integers which vary between 0 and 150 (inclusive),
X represents H or M and
M represents a monovalent, divalent or trivalent cation,
said method comprising the following steps:
- oxy-alkylation of the compound of formula (XIV): 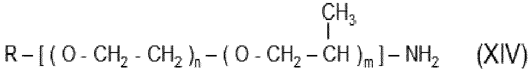 in the presence of at least (n₁ + n₂) moles of ethylene oxide and at least (m₁+m₂) moles of propylene oxide per mole of the compound of formula (XIV),
- phosphating of the intermediate compound of formula (XV): 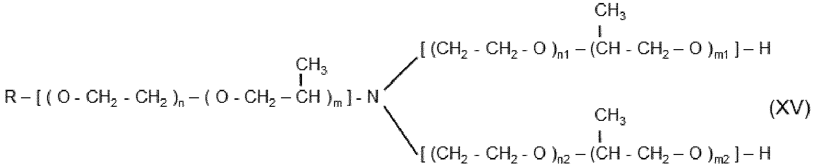 in the presence of P₂O₅ and water and
- optionally, partial or complete neutralization of the phosphate compound thus obtained, so as to obtain an additive comprising a mixture of the compounds of formulas (I), (II) and (III).

13. The use of an additive according to any one of the claims 1 to 7, for preparing a hydraulic composition chosen from a concrete and a mortar.

14. A method for preparing a hydraulic composition, consisting of adding an additive according to any one of the claims 1 to 7 to said composition.
